# EUROPÄISCHE PATENTSCHRIFT

(11) **EP 2 918 434 B1**
(45) Veröffentlichungstag und Bekanntmachung des Hinweises auf die Patenterteilung: **01.07.2020**
(21) Anmeldenummer: 14003345.7
(22) Anmeldetag: 27.09.2014
(51) Int. Cl.: B60K 5/12, B62D 21/11

(54) **Motor-/Getriebelagerung für ein Kraftfahrzeug**
Engine/transmission support for a motor vehicle
Carter moteur/boîte de vitesses pour un véhicule automobile

(30) Priorität: 13.12.2013 DE 102013021009
(43) Veröffentlichungstag der Anmeldung: 16.09.2015
(73) Patentinhaber: MAN Truck & Bus SE, 80995 München (DE)
(72) Erfinder: Hörmann, Robert, 85461 Bockhorn (DE); Kraus, Alfons, 83624 Otterfing (DE)
(74) Vertreter: v. Bezold & Partner Patentanwälte - PartG mbB

(56) Entgegenhaltungen:
- WO-A1-2012/112041
- WO-A1-2014/200392
- DE-C1- 10 158 107
- GB-A- 2 400 588

## Beschreibung

Die Erfindung betrifft eine Motor-/Getriebelagerung für ein Fahrzeug, vorzugsweise Nutzfahrzeug. Die Motor-/Getriebelagerung dient insbesondere zur schwingungsbeweglichen Lagerung eines Verbrennungsmotors und/oder eines Getriebes des Fahrzeugs, zweckmäßig an einer Fahrzeugrahmenstruktur.

GB 2 400 588 A offenbart eine modulare unabhängige Aufhängung für angetriebene und nicht angetriebene Achsen und gelenkte und nicht gelenkte Räder, welche direkt am Chassis eines Fahrzeugs, welches durch die Aufhängung getragen ist, montierbar ist, ohne dass zwischenliegende Unterrahmen verwendet werden, wobei die Radachslasten, die auf ein von der Aufhängung getragenes Rad einwirken, direkt von der Radanordnung auf das Fahrzeugchassis übertragen werden. WO 2014/200392 A1 offenbart ein Querelement für ein Fahrzeug, das eine Rahmenstruktur aufweist, die zwei Längsträger aufweist, wobei das Querelement einen Hauptabschnitt und zwei Endabschnitte aufweist, wobei jeder Endabschnitt eine Außenfläche aufweist, um einer Innenfläche eines Längsrahmenträgers gegenüber zu liegen, wobei das Querelement wenigstens einen Vorsprung aufweist, der sich von der Außenfläche der Endabschnitte erstreckt, um in ein Loch oder eine Kerbe des Rahmenträgers eingeführt zu werden, um einen Formschluss mit einer oder mehreren Komponenten zu bilden, die an dem Längsrahmenträger anzubringen sind.

Nutzfahrzeuge umfassen üblicherweise eine Antriebseinheit aus Verbrennungsmotor und Getriebe. Die Antriebseinheit ist üblicherweise über eine Motor- und Getriebelagerung mit einem leiterrahmenförmigen, Längs- und Querträger umfassenden Nutzfahrzeugrahmen verbunden. Die Querträger sind andernorts mit den Längsträgern verbunden und stabilisieren und beeinflussen die Verwindungssteifigkeit des gesamten Nutzfahrzeugrahmens und absorbieren zudem mitunter Kräfte, die durch die Motor- und Getriebelagerung in den Nutzfahrzeugrahmen eingeleitet werden. Üblicherweise sind somit quasi zweierlei Verbindungskonstruktionen erforderlich. Einerseits Verbindungskonstruktionen, um den Verbrennungsmotor und das Getriebe mit dem Nutzfahrzeugrahmen zu verbinden. Andererseits Verbindungskonstruktionen, um die Querträger mit den Längsträgern zu verbinden. Die verschiedenen Verbindungskonstruktionen beanspruchen einerseits relativ viel Bauraum und führen wegen der Beabstandung zu einer insoweit eher ungünstigen Lastabtragung.

Eine Aufgabe der Erfindung ist es, eine verbesserte und/oder alternative Möglichkeit zur zweckmäßig schwingungsbeweglichen Lagerung eines Motors und/oder Getriebes eines Fahrzeugs zu schaffen.

Diese Aufgabe kann mit den Merkmalen des unabhängigen Anspruchs gelöst werden. Vorteilhafte Weiterbildungen können den Unteransprüchen und der folgenden Beschreibung entnommen werden.

Die Erfindung schafft eine Tragkonsole für eine Traganordnung zum Tragen eines Motors, insbesondere Verbrennungsmotors, und/oder eines Getriebes eines Fahrzeugs, vorzugsweise eines Nutzfahrzeugs, wie etwa ein Lastkraftwagen oder ein Omnibus. Die Tragkonsole dient vorzugsweise zur lastabtragenden Anordnung zwischen einen Längsträger und einen Querträger einer Fahrzeugrahmenstruktur.

Die Tragkonsole umfasst einen Aufnahmeraum zur Aufnahme einer Lagereinrichtung für eine Halteeinrichtung zur Halterung des Motors und/oder des Getriebes und eine Verbindungseinrichtung zum mittelbaren oder unmittelbaren Verbinden mit einem Querträger der Fahrzeugrahmenstruktur, so dass die Tragkonsole zweckmäßig als Lagerung für den Querträger dienen kann.

Die Erfindung schafft eine Tragkonsole, die zweckmäßig sowohl als Gehäuse für eine (Motor- und/oder Getriebe-) Lagereinrichtung als auch als Lagerung, insbesondere Basis- oder Montagestruktur, für einen Querträger einer Fahrzeugrahmenstruktur dient

Die Tragkonsole ist somit vorzugsweise so ausgeführt, dass sie sowohl die Funktion einer Motor- und/oder Getriebelagerung als auch die Funktion einer Querträgerlagerung übernehmen kann.

Die Tragkonsole ermöglicht somit insbesondere, dass Kräfte zweckmäßig dort aufgenommen werden können, wo sie in die Fahrzeugrahmenstruktur eingeleitet werden.

Als weitere Vorteile der Tragkonsole können insbesondere genannt werden: Gewichtseinsparung, Bauraumgewinnung, Kosteneinsparung, Verkürzung der Montagezeit, Reduzierung des Lagerplatzes und/oder Reduzierung der Teileanzahl.

Der Aufnahmeraum wird durch eine Bodenwand, zwei Seitenwände und eine Oberwand begrenzt.

Der Aufnahmeraum kann zudem durch eine Rückwand begrenzt werden.

Die Bodenwand, die Seitenwände, die Rückwand und/oder die Oberwand kann z.B. platten-, steg- oder balkenförmig ausgeführt sein.

Die Verbindungseinrichtung ist zweckmäßig an den zwei Seitenwänden ausgebildet.

Die Verbindungseinrichtung kann eine oder mehrere Befestigungsöffnungen umfassen, die sich vorzugsweise quer (z.B. rechtwinklig oder schräg) zu den Seitenwandebenen erstrecken.

Die Tragkonsole umfasst eine Befestigungseinrichtung zur (vorzugsweise mittelbaren oder unmittelbaren) Montage an einen Längsträger der Fahrzeugrahmenstruktur.

Die Befestigungseinrichtung ist vorzugsweise ebenfalls an den zwei Seitenwänden ausgebildet. Alternativ oder ergänzend kann die Befestigungseinrichtung an Flanschen ausgeführt sein, die von der Tragkonsole z.B. seitlich abstehen.

Die Befestigungseinrichtung umfasst mehrere Befestigungsöffnungen, die sich in den Seitenwandebenen und somit quasi parallel dazu erstrecken.

Die Tragkonsole ist zweckmäßig zur Aufnahme und Weiterleitung der Lasten (Kräfte) aus der Halteeinrichtung und dem Querträger ausgeführt. Die Tragkonsole ist insbesondere ausgeführt, um als lastabtragendes Teil der Fahrzeugrahmenstruktur zu wirken.

Der Aufnahmeraum ist zweckmäßig so ausgeführt, dass er die Lagereinrichtung passgenau aufnehmen kann.

Zu erwähnen ist, dass die Lagereinrichtung vorzugsweise zur schwingungsbeweglichen Lagerung der Halteeinrichtung und somit insbesondere des Motors und/oder Getriebes ausgeführt ist.

Zu erwähnen ist ferner, dass die Tragkonsole quasi als Zwischenstück zwischen einem Längsträger und einem Querträger anzuordnen ist.

Zu erwähnen ist außerdem, dass der Motor vorzugsweise ein Verbrennungsmotor ist.

Zu erwähnen ist des Weiteren, dass die Halteeinrichtung z.B. als Lagertraverse ausgeführt sein kann. Die Lagertraverse ist vorzugsweise so ausgeführt, dass sie sich quasi durchgängig von der einen Tragkonsole zu der anderen Tragkonsole erstrecken kann. Die Halteeinrichtung kann allerdings auch Halterungen umfassen, die an einem Motor- und/oder Getriebegehäuse ausgebildet, z.B. angegossen, sind. Ferner kann die Halteeinrichtung separate Halterungen umfassen, die von den Lagereinrichtungen zweckmäßig einwärts abstehen. Im Rahmen der Erfindung sind somit Ausführungsformen umfasst, in denen die Halteeinrichtung sich durchgängig zwischen zwei gegenüberliegenden Tragkonsolen erstreckt, aber auch Ausführungsformen, in denen die Halteeinrichtung quasi kragarmförmig von der Lagereinrichtung absteht. Die Halteeinrichtung kann somit einteilig oder mehrteilig ausgeführt sein.

Die Erfindung umfasst ferner eine Traganordnung für einen Motor und/oder ein Getriebe eines Fahrzeugs, vorzugsweise eines Nutzfahrzeugs. Die Traganordnung umfasst zwei zweckmäßig gegenüberliegend angeordnete Tragkonsolen wie hierin beschrieben. Eine Halteeinrichtung zur Halterung des Motors und/oder des Getriebes ist an den Lagereinrichtungen der zwei Tragkonsolen gelagert. Zudem ist ein Querträger über die Verbindungseinrichtungen an den Tragkonsolen gelagert.

Die Erfindung umfasst des Weiteren eine z.B. leiterrahmenförmige Fahrzeugrahmenstruktur, mit zwei zweckmäßig gegenüberliegenden Längsträgern und einem oder mehreren Querträgern. Die Fahrzeugrahmenstruktur umfasst eine erste Tragkonsole, die eine Lagereinrichtung aufnimmt und an einen Längsträger der Fahrzeugrahmenstruktur mittelbar oder unmittelbar montiert ist, und eine zweite Tragkonsole, die eine Lagereinrichtung aufnimmt und an den anderen Längsträger der Fahrzeugrahmenstruktur mittelbar oder unmittelbar montiert ist. Die Fahrzeugrahmenstruktur zeichnet sich insbesondere dadurch aus, dass eine Halteeinrichtung zur Halterung eines Motors und/oder Getriebes des Fahrzeugs einerseits an der Lagereinrichtung der ersten Tragkonsole und andererseits an der Lagereinrichtung der zweiten Konsole gelagert ist, und zudem, dass ein Querträger einerseits mit der ersten Tragkonsole und andererseits mit der zweiten Tragkonsole verbunden ist.

Es ist möglich, dass der Querträger sich zumindest abschnittsweise über und/oder seitlich der Halteeinrichtung erstreckt. Alternativ oder ergänzend kann sich der Querträger zumindest abschnittsweise über und/oder seitlich der ersten Tragkonsole und der zweiten Tragkonsole erstrecken.

Der Querträger kann zumindest abschnittsweise die Halteeinrichtung in Längsrichtung und/oder Querrichtung der Fahrzeugrahmenstruktur überspannen. Alternativ oder ergänzend kann der Querträger zumindest abschnittsweise die erste Tragkonsole und die zweite Tragkonsole überspannen.

Der Querträger und die Halteeinrichtung erstrecken sich vorzugsweise parallel zueinander.

Der Querträger ist vorzugsweise ausgeführt, um die Halteeinrichtung und/oder die Tragkonsole(n) quasi sandwichförmig abzudecken.

Zu erwähnen ist noch, dass die Halteeinrichtung und der Querträger nicht nur durch die Tragkonsolen, sondern auch zwischen den Tragkonsolen miteinander verbunden sein können, was z.B. zur Steifigkeitserhöhung beiträgt.

Darüber hinaus umfasst die Erfindung ein Fahrzeug mit zumindest einer Tragkonsole, einer Traganordnung und/oder einer Fahrzeugrahmenstruktur, wie hierin beschrieben.

Zu erwähnen ist, dass das Fahrzeug vorzugsweise ein Kraftfahrzeug und/oder Nutzfahrzeug ist, z.B. ein Lastkraftwagen oder ein Omnibus.

Zu erwähnen ist ferner, dass die Tragkonsole, insbesondere die Befestigungseinrichtung, nicht darauf beschränkt ist, an einem Längsträger einer leiterrahmenförmigen Fahrzeugrahmenstruktur befestigt zu werden, sondern ebenso zur Befestigung an einer Fahrzeugkarosserie dienen kann. Das Merkmal Fahrzeugrahmenstruktur und/oder Längsträger ist im Rahmen der Erfindung somit breit auszulegen. Die Fahrzeugrahmenstruktur und/oder der Längsträger können im Rahmen der Erfindung Teil eines leiterrahmenförmigen Fahrzeugrahmens (z. B. Fahrgestell) oder Teil einer selbsttragenden Fahrzeugkarosserie sein.

Die zuvor beschriebenen bevorzugten Ausführungsformen und Merkmale der Erfindung sind beliebig miteinander kombinierbar. Andere vorteilhafte Weiterbildungen sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Traganordnung gemäß einer Ausführungsform der Erfindung,
- Figur 2: zeigt eine Ansicht von vorne auf die Traganordnung der Figur 1,
- Figur 3: zeigt eine perspektivische Ansicht einer Tragkonsole gemäß einer Ausführungsform der Erfindung,
- Figur 4: zeigt eine Ansicht von hinten auf die Tragkonsole der Figur 3,
- Figur 5: zeigt eine Seitenansicht der Tragkonsole der Figuren 3 und 4,
- Figur 6: zeigt eine Ansicht von oben auf die Tragkonsole der Figuren 3 bis 5,
- Figur 7: zeigt eine Tragkonsole gemäß einer Ausführungsform der Erfindung,
- Figur 8: zeigt eine perspektivische Ansicht einer Fahrzeugrahmenstruktur gemäß einer Ausführungsform der Erfindung,
- Figur 9: zeigt eine Ansicht von oben auf die Fahrzeugrahmenstruktur der Figur 8 und
- Figur 10: zeigt eine perspektivische Ansicht einer Traganordnung gemäß einer Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen verwiesen wird, um Wiederholungen zu vermeiden.

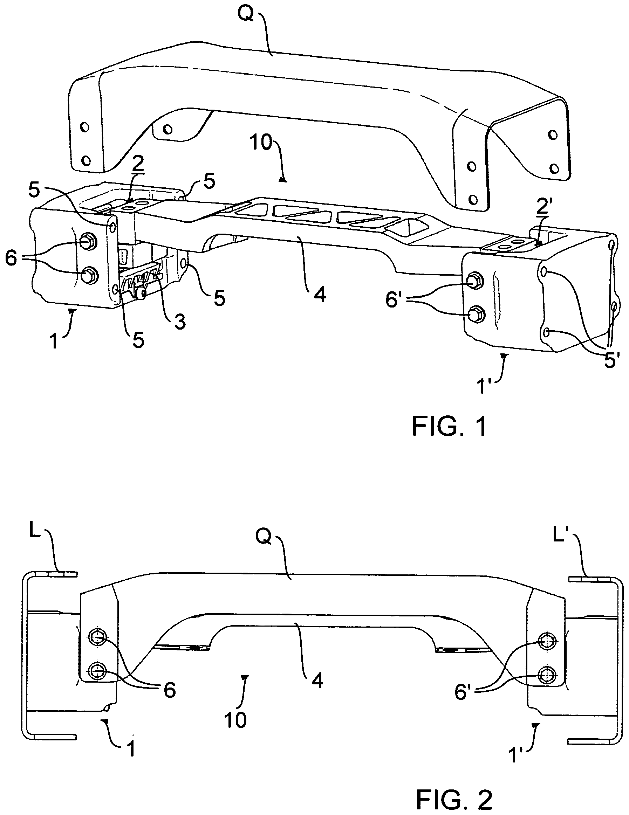

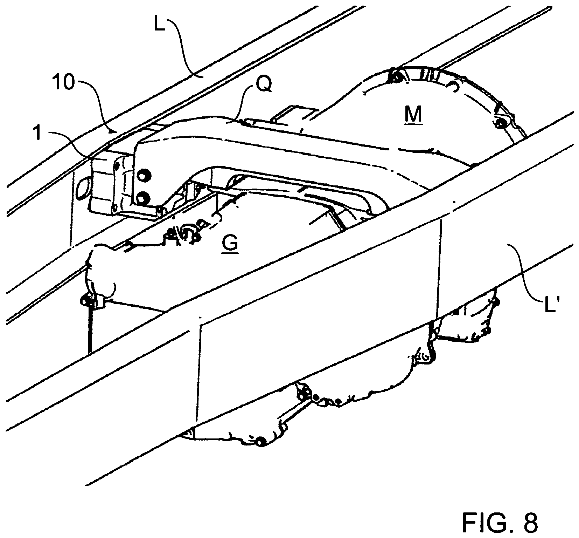

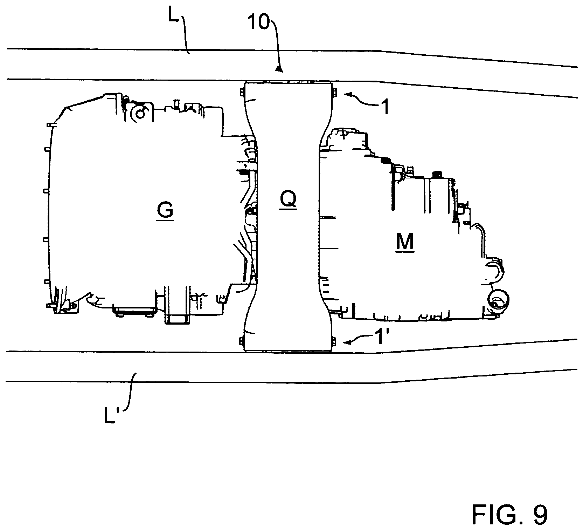

Figur 1 zeigt eine perspektivische Ansicht einer Traganordnung 10 für einen Verbrennungsmotor M und ein Getriebe G eines Fahrzeugs, insbesondere eines Lastkraftwagens. Der Verbrennungsmotor M und das Getriebe G können beispielhaft in den Figuren 8 und 9 gesehen werden.

Die Traganordnung 10 umfasst zwei erfindungsgemäße, gegenüberliegend angeordnete Tragkonsolen 1 und 1'. Die Tragkonsolen 1 und 1' sind baugleich ausgeführt, so dass die nachfolgende Beschreibung meist nur in Bezug auf eine Tragkonsole 1 erfolgt.

Die Tragkonsole 1 umfasst einen Aufnahmeraum 2 zur Aufnahme einer Lagereinrichtung 3. Die Lagereinrichtung 3 dient zur schwingungsbeweglichen Lagerung für eine Halteeinrichtung 4 zur Halterung des Verbrennungsmotors M und des Getriebes G. Die in Figur 1 gezeigte Halteeinrichtung 4 ist als durchgehende Lagertraverse ausgeführt, die einerseits auf der Tragkonsole 1 und andererseits auf der Tragkonsole 1' gelagert ist.

Die Tragkonsole 1 umfasst ferner eine Befestigungseinrichtung 5 zur Montage an einen Längsträger L einer wie z.B. in den Figuren 8 und 9 gezeigten Fahrzeugrahmenstruktur.

Die Tragkonsole 1 umfasst des Weiteren eine Verbindungseinrichtung 6 zum Verbinden mit einem Querträger Q einer wie z.B. in den Figuren 8 und 9 gezeigten Fahrzeugrahmenstruktur.

Figur 2 zeigt eine Ansicht von vorne auf die Traganordnung 10 der Figur 1.

Einerseits ist die Halteeinrichtung 4 an der Lagereinrichtung 3 der Tragkonsole 1 gelagert. Andererseits ist die Halteeinrichtung 4 an der Lagereinrichtung 3' der Tragkonsole 1' gelagert.

Einerseits ist der Querträger Q über die Verbindungseinrichtung 6 mit der Tragkonsole 1 verbunden. Andererseits ist der Querträger Q über die Verbindungseinrichtung 6' mit der Tragkonsole 1' verbunden.

Die Tragkonsole 1 ist mittels der Befestigungseinrichtung 5 an den Längsträger L montiert, während die Tragkonsole 1' über die Befestigungseinrichtung 5' an den Längsträger L' montiert ist.

Aus den Figuren 1 und 2 ergibt sich, dass die Tragkonsole 1 als Zwischenstück zur Anordnung zwischen den Längsträger L und den Querträger Q ausgeführt ist und zur Aufnahme und Weiterleitung der Lasten aus der Halteeinrichtung 4 und dem Querträger Q dient. Die Tragkonsole 1 wirkt sowohl als Gehäuse für die Lagereinrichtung 3 als auch als Lagerung, insbesondere Basis-/Montagestruktur, für den Querträger Q.

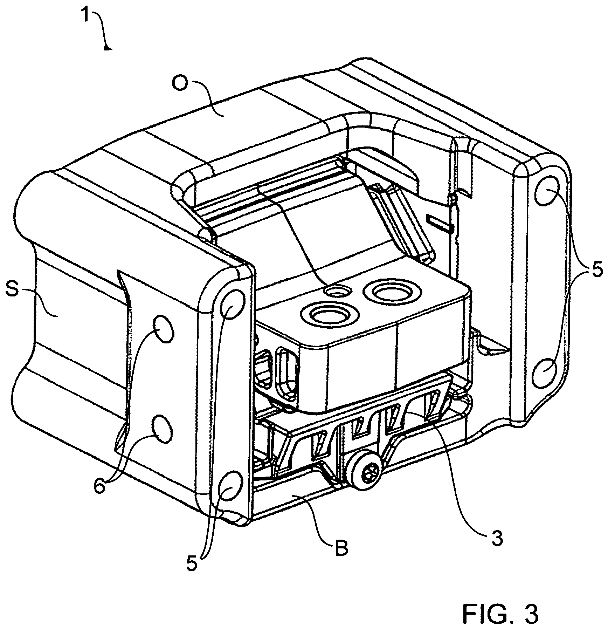

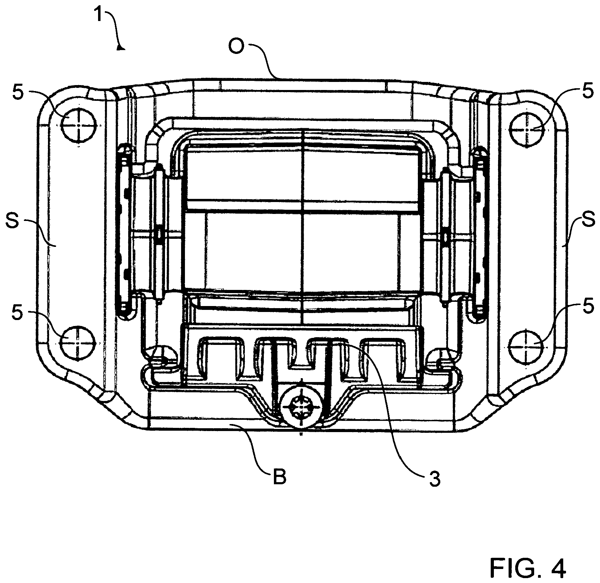

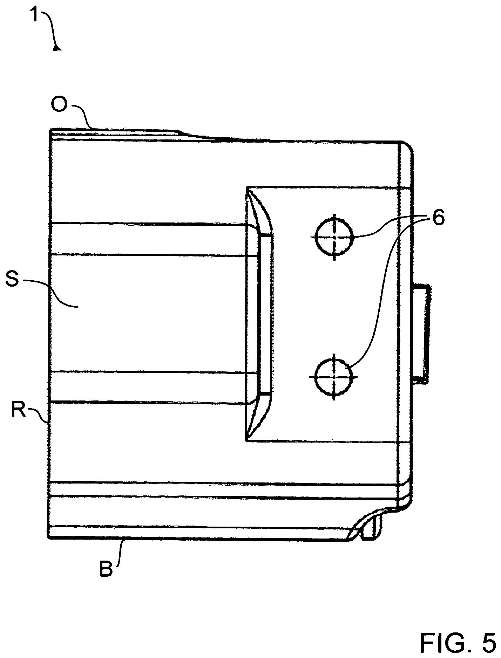

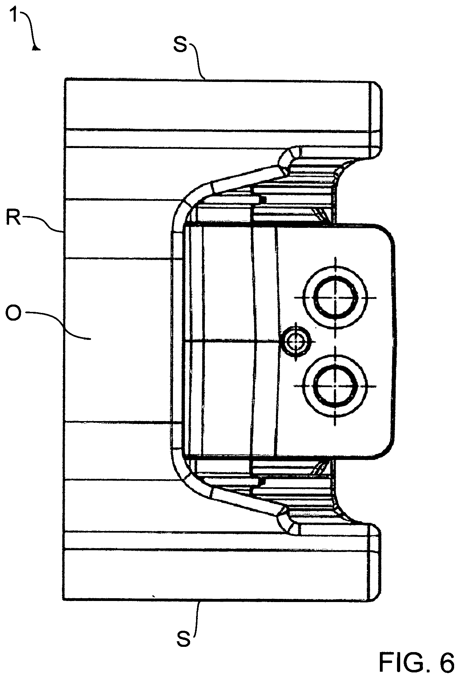

Figur 3 zeigt eine perspektivische Ansicht einer Tragkonsole 1 der Figuren 1 und 2. Die Tragkonsole 1 umfasst einen Aufnahmeraum 2, der in Figur 3 quasi durch die Lagereinrichtung 3 und einen Endabschnitt der Halteeinrichtung 4 ausgefüllt wird, weshalb er zu Klarheitszwecken mit keinem Bezugszeichen versehen ist. Die Figuren 4 bis 6 zeigen die Tragkonsole 1 der Figur 3 in verschiedenen Ansichten.

Unter Bezugnahme auf die Figuren 3 bis 6 wird der Aufnahmeraum 2 durch eine Bodenwand B, zwei Seitenwände S, eine Rückwand R und eine Oberwand O begrenzt. Die Bodenwand B, die Seitenwände S und die Rückwand R sind plattenförmig ausgeführt, während die Oberwand O eher balken- oder stegförmig ausgeführt ist, was einen leichten Zugang zur Lagereinrichtung 3 ermöglicht.

Die Verbindungseinrichtung 6 zum Verbinden mit dem Querträger Q ist an den zwei Seitenwänden S ausgebildet. Die Befestigungsöffnungen der Verbindungseinrichtung 6 erstrecken sich quer (rechtwinklig oder schräg) zu den Ebenen der Seitenwände S.

Die Befestigungseinrichtung 5 zur Montage an den Längsträger L ist ebenfalls an den Seitenwänden S ausgebildet. Die Befestigungsöffnungen der Befestigungseinrichtung 5 erstrecken sich allerdings in den Ebenen der Seitenwände S.

Die Befestigungsöffnungen der Verbindungseinrichtung 6 und die Befestigungsöffnungen der Befestigungseinrichtung 5 erstrecken sich somit schräg, vorzugsweise rechtwinklig, zu einander.

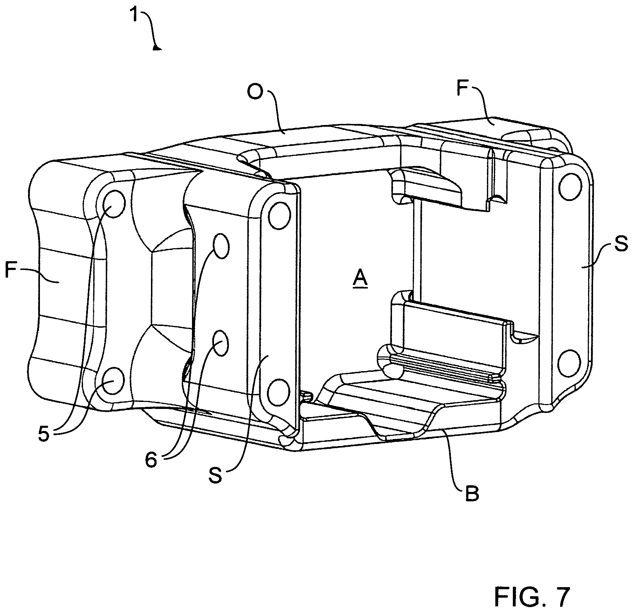

Figur 7 zeigt eine perspektivische Ansicht einer Tragkonsole 1 gemäß einer anderen Ausführungsform der Erfindung. Eine Besonderheit der in Figur 7 gezeigten Ausführungsform ist, dass die Tragkonsole 1 seitlich abstehende Flansche F aufweist und die Flansche F die Befestigungseinrichtung 5 zur Montage an den Längsträger L aufweisen.

Figur 8 zeigt eine perspektivische Ansicht einer Fahrzeugrahmenstruktur gemäß einer Ausführungsform der Erfindung. Figur 9 zeigt eine Ansicht von oben auf die Fahrzeugrahmenstruktur der Figur 8.

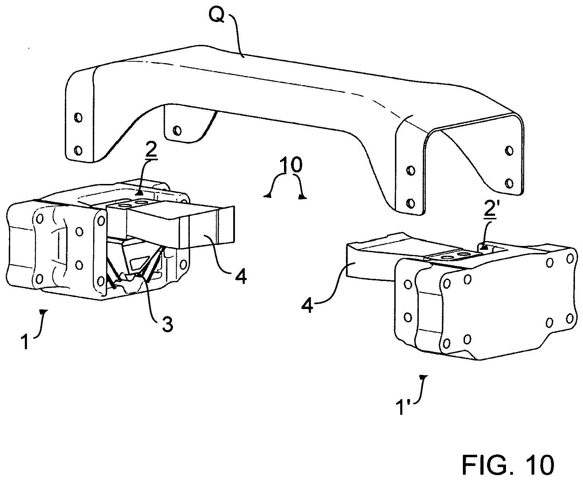

Unter Bezugnahme auf die Figuren 8 und 9 umfasst die Fahrzeugrahmenstruktur zwei einander gegenüberliegende Längsträger L und L' und einen Querträger Q. Die Tragkonsole 1 nimmt eine Lagereinrichtung 3 auf und ist an den Längsträger L montiert. Die Tragkonsole 1' nimmt eine Lagereinrichtung 3' auf und ist an den Längsträger L' montiert. Die Halteeinrichtung 4 ist einerseits an der Lagereinrichtung 3 der Tragkonsole 1 und andererseits an der Lagereinrichtung 3' der Tragkonsole 1' gelagert und haltert zum einen den Verbrennungsmotor M und zum anderen das Getriebe G des Fahrzeugs. Der Querträger Q ist einerseits mit der Tragkonsole 1 und anderseits mit der Tragkonsole 1' verbunden. Der Querträger Q erstreckt sich über der Halteeinrichtung 4, der Tragkonsole 1 und der Tragkonsole 1' und deckt selbige zumindest abschnittsweise oben und sandwichförmig seitlich ab. Im Rahmen der Erfindung sind allerdings ebenso Ausführungsformen möglich, in denen der Querträger Q sich unter und/oder seitlich der Halteeinrichtung 4 und den Tragkonsolen 1 und 1' erstreckt. Figur 10 zeigt eine perspektivische Ansicht einer Traganordnung 10 gemäß einer anderen Ausführungsform der Erfindung. Eine Besonderheit der in Figur 10 gezeigten Ausführungsform ist, dass die Halteeinrichtung 4 nicht als Lagertraverse ausgeführt ist, sondern separate, an den Lagereinrichtungen 3 und 3' ausgebildete Halterungen umfasst. Die Halterungen dienen ähnlich wie eine Lagertraverse zur Halterung eines Motors M und eines Getriebes G, erstrecken sich allerdings nicht durchgängig von der Tragkonsole 1 zu der Tragkonsole 1', sondern sind eher kragarmförmig, in Querrichtung der Fahrzeugrahmenstruktur voneinander beabstandet ausgeführt. Bei einer nicht gezeigten Ausführungsform der Erfindung können die Halterungen z. B. an ein Motor- und/oder Getriebegehäuse angebracht (z.B. angegossen) sein, um auf den Lagereinrichtungen 3 und 3' der Tragkonsolen 1 und 1' gelagert zu werden.

### Bezugszeichenliste

- 1, 1': Tragkonsole
- 2, 2': Aufnahmeraum
- 3, 3': Lagereinrichtung
- 4: Halteeinrichtung
- 5, 5': Befestigungseinrichtung
- 6, 6': Verbindungseinrichtung
- L, L': Längsträger
- Q: Querträger
- B: Bodenwand
- S: Seitenwand
- R: Rückwand
- O: Oberwand
- F: Flansche
- 10: Traganordnung
- M: Motor
- G: Getriebe

## Patentansprüche

1. Tragkonsole (1) für eine Traganordnung (10) zum Tragen eines Motors (M) und/oder eines Getriebes (G) eines Fahrzeugs und vorzugsweise zur lastabtragenden Anordnung zwischen einem Längsträger (L) und einem Querträger (Q) einer Fahrzeugrahmenstruktur, mit:
- einem Aufnahmeraum (2) zur Aufnahme einer Lagereinrichtung (3) für eine Halteeinrichtung (4) zur Halterung des Motors (M) und/oder des Getriebes (G), und
- einer Verbindungseinrichtung (6) zum Verbinden mit einem Querträger (Q) einer Fahrzeugrahmenstruktur, **dadurch gekennzeichnet, dass**
- der Aufnahmeraum (2) durch eine Bodenwand (B), zwei Seitenwände (S) und eine Oberwand (O) begrenzt wird, und
- eine Befestigungseinrichtung (5) zur Montage an einen Längsträger (L) der Fahrzeugrahmenstruktur Befestigungsöffnungen umfasst, die sich in Seitenwandebenen und somit quasi parallel dazu erstrecken.

2. Tragkonsole (1) nach Anspruch 1, wobei der Aufnahmeraum (2) durch eine Rückwand (R) begrenzt wird.

3. Tragkonsole (1) nach Anspruch 1 oder 2, wobei die Verbindungseinrichtung (6) an den zwei Seitenwänden (S) ausgebildet ist.

4. Tragkonsole (1) nach einem der vorhergehenden Ansprüche, wobei die Verbindungseinrichtung (6) Befestigungsöffnungen umfasst, die sich quer zu den Seitenwandebenen erstrecken.

5. Tragkonsole (1) nach einem der vorhergehenden Ansprüche, wobei die Befestigungseinrichtung (5) an den zwei Seitenwänden (S) ausgebildet ist.

6. Tragkonsole (1) nach einem der vorhergehenden Ansprüche, wobei die Befestigungseinrichtung (5) an von der Tragkonsole (1) vorzugsweise seitlich abstehenden Flanschen (F) ausgebildet ist.

7. Tragkonsole (1) nach einem der vorhergehenden Ansprüche, wobei die Tragkonsole (1) ausgeführt ist, um als lastabtragendes Teil der Fahrzeugrahmenstruktur zu wirken, vorzugsweise zur Aufnahme und Weiterleitung der Lasten aus der Halteeinrichtung (4) und dem Querträger (Q).

8. Tragkonsole (1) nach einem der vorhergehenden Ansprüche, wobei der Aufnahmeraum (A) zur passgenauen Aufnahme der Lagereinrichtung (3) ausgeführt ist.

9. Traganordnung (10) für einen Motor (M) und/oder ein Getriebe (G) eines Fahrzeugs, mit zwei gegenüberliegend angeordneten Tragkonsolen (1, 1') nach einem der vorhergehenden Ansprüche, wobei eine Lagertraverse (4) zur Halterung des Motors (M) und/oder des Getriebes (G) an den Lagereinrichtungen (3, 3') der zwei Tragkonsolen (1, 1') gelagert ist und wobei ein Querträger (Q) mit den zwei Tragkonsolen (1, 1') verbunden ist.

10. Fahrzeugrahmenstruktur, mit zwei Tragkonsolen (1, 1') nach einem der Ansprüche 1 bis 8, zwei gegenüberliegend angeordneten Längsträgern (L) und zumindest einem Querträger (Q), wobei:
- eine erste Tragkonsole (1) eine Lagereinrichtung (3) aufnimmt und an einen Längsträger (L) der Fahrzeugrahmenstruktur montiert ist,
- eine zweite Tragkonsole (1') eine Lagereinrichtung (3') aufnimmt und an den anderen Längsträger (L') der Fahrzeugrahmenstruktur montiert ist,
- eine Halteeinrichtung (4) einerseits an der Lagereinrichtung (3) der ersten Tragkonsole (1) und andererseits an der Lagereinrichtung (3') der zweiten Tragkonsole (1') gelagert ist und zur Halterung eines Motors (M) und/oder eines Getriebes (G) des Fahrzeugs dient, und
- der Querträger (Q) einerseits mit der ersten Tragkonsole (1) und andererseits mit der zweiten Tragkonsole (1') verbunden ist.

11. Fahrzeugrahmenstruktur nach Anspruch 10, wobei sich der Querträger (Q) zumindest abschnittsweise über und/oder seitlich der Halteeinrichtung (4) und/oder der ersten Tragkonsole (1) und der zweiten Tragkonsole (1') erstreckt.

12. Fahrzeugrahmenstruktur nach Anspruch 10 oder 11, wobei der Querträger (Q) die Halteeinrichtung (4) zumindest abschnittsweise in Längsrichtung und/oder Querrichtung der Fahrzeugrahmenstruktur überspannt.

13. Fahrzeugrahmenstruktur nach einem der Ansprüche 10 bis 12, wobei der Querträger (Q) die erste Tragkonsole (1) und die zweite Tragkonsole (1') zumindest abschnittsweise in Längsrichtung und/oder Querrichtung der Fahrzeugrahmenstruktur überspannt.

14. Fahrzeug, vorzugsweise Nutzfahrzeug, mit zumindest einer Tragkonsole (1) nach einem der Ansprüche 1 bis 9, einer Traganordnung (10) nach Anspruch 10 oder einer Fahrzeugrahmenstruktur nach einem der Ansprüche 10 bis 13.

## Claims

1. A supporting bracket (1) for a supporting arrangement (10) for supporting an engine (M) and/or a transmission (G) of a vehicle and preferably for the load-transferring arrangement between a longitudinal carrier (L) and a crossmember (Q) of a vehicle frame structure, with:
- a receiving space (2) for receiving a bearing device (3) for a holding device (4) for mounting the engine (M) and/or the transmission (G), and
- a connecting device (6) for connecting to a crossmember (Q) of a vehicle frame structure, **characterized in that**
- the receiving space (2) is delimited by way of a bottom wall (B), two side walls (S) and an upper wall (O), and
- a fastening device (5) for mounting on a longitudinal carrier (L) of the vehicle frame structure comprises fastening openings which extend in side wall planes and therefore quasi parallel thereto.

2. The supporting bracket (1) according to Claim 1, the receiving space (2) being delimited by way of a rear wall (R) .

3. The supporting bracket (1) according to Claim 1 or 2, the connecting device (6) being configured on the two side walls (S).

4. The supporting bracket (1) according to one of the preceding claims, the connecting device (6) comprising fastening openings which extend transversely with respect to the side wall planes.

5. The supporting bracket (1) according to one of the preceding claims, the fastening device (5) being configured on the two side walls (S).

6. The supporting bracket (1) according to one of the preceding claims, the fastening device (5) being configured on flanges (F) which preferably project laterally from the supporting bracket (1).

7. The supporting bracket (1) according to one of the preceding claims, the supporting bracket (1) being configured to act as a load-transferring part of the vehicle frame structure, preferably in order to absorb and forward the loads from the holding device (4) and the crossmember (Q).

8. The supporting bracket (1) according to one of the preceding claims, the receiving space (A) being configured to receive the bearing device (3) with an accurate fit.

9. A supporting arrangement (10) for an engine (M) and/or a transmission (G) of a vehicle, with two supporting brackets (1, 1') according to one of the preceding claims which are arranged so as to lie opposite one another, a bearing bed plate (4) for holding the engine (M) and/or the transmission (G) being mounted on the bearing devices (3, 3') of the two supporting brackets (1, 1'), and a crossmember (Q) being connected to the two supporting brackets (1, 1').

10. A vehicle frame structure, with two supporting brackets (1, 1') according to one of Claims 1 to 8, two longitudinal carriers (L) which are arranged so as to lie opposite one another, and at least one crossmember (Q):
- a first supporting bracket (1) receiving a bearing device (3) and being mounted on a longitudinal carrier (L) of the vehicle frame structure,
- a second supporting bracket (1') receiving a bearing device (3') and being mounted on the other longitudinal carrier (L') of the vehicle frame structure,
- a holding device (4) being mounted firstly on the bearing device (3) of the first supporting bracket (1) and secondly on the bearing device (3') of the second supporting bracket (1'), and serving to hold an engine (M) and/or a transmission (G) of the vehicle, and
- the crossmember (Q) being connected firstly to the first supporting bracket (1) and secondly to the second supporting bracket (1').

11. The vehicle frame structure according to Claim 10, the crossmember (Q) extending at least in sections above and/or to the side of the holding device (4) and/or the first supporting bracket (1) and the second supporting bracket (1').

12. The vehicle frame structure according to Claim 10 or 11, the crossmember (Q) spanning the holding device (4) at least in sections in the longitudinal direction and/or transverse direction of the vehicle frame structure.

13. The vehicle frame structure according to one of Claims 10 to 12, the crossmember (Q) spanning the first supporting bracket (1) and the second supporting bracket (1') at least in sections in the longitudinal direction and/or transverse direction of the vehicle frame structure.

14. A vehicle, preferably a commercial vehicle, with at least one supporting bracket (1) according to one of Claims 1 to 9, a supporting arrangement (10) according to Claim 10, or a vehicle frame structure according to one of Claims 10 to 13.

## Revendications

1. Console de support (1) pour un agencement de support (10) pour supporter un moteur (M) et/ou une boîte de vitesses (G) d'un véhicule et de préférence pour un agencement à transmission de charge entre un longeron (L) et une traverse (Q) d'une structure de châssis de véhicule, comprenant :
- un espace de réception (2) pour recevoir un dispositif de palier (3) pour un dispositif de retenue (4) pour retenir le moteur (M) et/ou la boîte de vitesses (G), et
- un dispositif de liaison (6) pour la liaison à une traverse (Q) d'une structure de châssis de véhicule, **caractérisée en ce que**
- l'espace de réception (2) est limité par une paroi de fond (B), deux parois latérales (S) et une paroi supérieure (O), et
- un dispositif de fixation (5) pour le montage sur un longeron (L) de la structure de châssis de véhicule comprend des ouvertures de fixation qui s'étendent dans des plans des parois latérales et donc quasiment parallèlement à ceux-ci.

2. Console de support (1) selon la revendication 1, dans laquelle l'espace de réception (2) est limité par une paroi arrière (R).

3. Console de support (1) selon la revendication 1 ou 2, dans laquelle le dispositif de liaison (6) est réalisé au niveau des deux parois latérales (S).

4. Console de support (1) selon l'une quelconque des revendications précédentes, dans laquelle le dispositif de liaison (6) comprend des ouvertures de fixation qui s'étendent transversalement aux plans des parois latérales.

5. Console de support (1) selon l'une quelconque des revendications précédentes, dans laquelle le dispositif de fixation (5) est réalisé au niveau des deux parois latérales (S).

6. Console de support (1) selon l'une quelconque des revendications précédentes, dans laquelle le dispositif de fixation (5) est réalisé au niveau de brides (F) de préférence saillant latéralement depuis la console de support (1).

7. Console de support (1) selon l'une quelconque des revendications précédentes, la console de support (1) étant réalisée pour agir en tant que partie transférant la charge de la structure de châssis de véhicule, de préférence pour recevoir et transmettre les charges provenant du dispositif de retenue (4) et de la traverse (Q).

8. Console de support (1) selon l'une quelconque des revendications précédentes, dans laquelle l'espace de réception (A) est réalisé pour recevoir avec ajustement précis le dispositif de palier (3).

9. Agencement de support (10) pour un moteur (M) et/ou une boîte de vitesses (G) d'un véhicule, comprenant deux consoles de support (1, 1') disposées à l'opposé l'une de l'autre, selon l'une quelconque des revendications précédentes, une traverse de palier (4) pour retenir le moteur (M) et/ou la boîte de vitesses (G) étant supportée au niveau des dispositifs de palier (3, 3') des deux consoles de support (1, 1') et une traverse (Q) étant connectée aux deux consoles de support (1, 1').

10. Structure de châssis de véhicule comprenant deux consoles de support (1, 1') selon l'une quelconque des revendications 1 à 8, deux longerons (L) disposés à l'opposé l'un de l'autre et au moins une traverse (Q), dans laquelle :
- une première console de support (1) reçoit un dispositif de palier (3) et est montée au niveau d'un longeron (L) de la structure de châssis de véhicule,
- une deuxième console de support (1') reçoit un dispositif de palier (3') et est montée au niveau de l'autre longeron (L') de la structure de châssis de véhicule,
- un dispositif de retenue (4) est supporté d'une part sur le dispositif de palier (3) de la première console de support (1) et d'autre part sur le dispositif de palier (3') de la deuxième console de support (1') et sert à retenir un moteur (M) et/ou une boîte de vitesses (G) du véhicule, et
- la traverse (Q) est connectée d'une part à la première console de support (1) et d'autre part à la deuxième console de support (1').

11. Structure de châssis de véhicule selon la revendication 10, dans laquelle la traverse (Q) s'étend au moins en partie sur le dispositif de retenue (4) et/ou latéralement à celui-ci et/ou sur la première console de support (1) et la deuxième console de support (1') et/ou latéralement à celles-ci.

12. Structure de châssis de véhicule selon la revendication 10 ou 11, dans laquelle la traverse (Q) s'étend par-dessus le dispositif de retenue (4) au moins en partie dans la direction longitudinale et/ou dans la direction transversale de la structure de châssis de véhicule.

13. Structure de châssis de véhicule selon l'une quelconque des revendications 10 à 12, dans laquelle la traverse (Q) s'étend par-dessus la première console de support (1) et la deuxième console de support (1') au moins en partie dans la direction longitudinale et/ou dans la direction transversale de la structure de châssis de véhicule.

14. véhicule, de préférence véhicule utilitaire, comprenant au moins une console de support (1) selon l'une quelconque des revendications 1 à 9, un agencement de support (10) selon la revendication 10 ou une structure de châssis de véhicule selon l'une quelconque des revendications 10 à 13.
